# EUROPEAN PATENT SPECIFICATION

(11) **EP 3 825 206 B1**
(45) Date of publication and mention of the grant of the patent: **07.06.2023**
(21) Application number: 20207871.3
(22) Date of filing: 16.11.2020
(51) Int. Cl.: B62B 1/20, B62B 5/00

(54) **SMART FOLDING WHEELBARROW**
INTELLIGENTE KLAPPBARE SCHUBKARRE
BROUETTE PLIABLE INTELLIGENTE

(30) Priority: 25.11.2019 IT 201900022062
(43) Date of publication of application: 26.05.2021
(73) Proprietor: Lavorosostenible S.r.l., 00167 Rome (RM) (IT)
(72) Inventor: ABBATECOLA, Tommaso, I-00165 ROMA (RM) (IT); D'AMICO, Francesca, I-00165 ROMA (RM) (IT)
(74) Representative: Fiammenghi, Eva

(56) References cited:
- EP-B1- 2 717 744
- US-A- 2 727 751
- US-A1- 2005 029 764
- US-A1- 2006 006 726
- US-A1- 2009 121 454
- US-A1- 2019 071 108

## Description

### Technical field

The present invention relates to the field of hand-moved devices for transporting materials by a human being. More in detail, the wheelbarrows are gripped with both hands by an operator and use a single front wheel to facilitate rolling on the ground. Even more in detail, the present invention relates to a new and innovative wheelbarrow suitable to be folded in order to be conveniently stowed away.

### Prior art

The wheelbarrow is an equipment that allows to transport by hand for short distances, loose materials or heavy or bulky objects.

From a technical point of view, the wheelbarrow is a lever of the second type. It generally consists of:
- a rubberised central wheel;
- two handles which are the extension of the shafts connected to the axis of the wheel. The shafts form the wheelbarrow frame and the supports for resting on the ground are fixed thereon;
- pedestals that serve to allow the wheelbarrow to rest on the ground without the latter tipping;
- a container or surface for stowing away the materials to be transported, made of plastic or sheet steel.

The first wheelbarrows date back to ancient times, to ancient Greece, around 400 BC. It was later adopted also by the Romans and therefore throughout the western world.

Such a long history justifies the plurality of types and forms of wheelbarrows currently in use. Among the various models, suitably designed to be adaptable to the transportation of any material, also known are folding wheelbarrows, i.e. modular in the basic components in order to be stowed away occupying the least possible space. When using the wheelbarrow again, the operator must then reassemble it before transporting it normally.

Some international patents have specifically addressed this type of folding wheelbarrows. US2011175332, US2007114765, US3722904, and US5372376 are just a few examples. Other examples of prior art wheelbarrows are US 2727751 A and EP 2717744 B1 which show folding wheelbarrows. Document US 2006/0006726 A1 discloses a dumping apparatus with weight sensing elements. Document US 2009/0121454 A1 discloses a pushchair or pram with an opening sensor.

Although a wide range of models exist, still no wheelbarrow seems to be designed "smart" by state of the art of technological and sensory equipment. The risks related to disassembling and reassembling the components are obvious. Over time, disassemblable components tend to yield, misalign or stiffen, making new assemblies difficult, if not difficult to transport, especially when heavy materials are involved.

Due to this still unresolved criticality, the usual users of wheelbarrows (construction firms, agricultural companies, workers in general) prefer to use monolithic steel wheelbarrows which, considering greater safety, have the criticalities of the non-reducible overall dimensions, of the weight and of the irreplaceability of the components.

Thus, an object of the present invention is to solve the criticalities relating to folding wheelbarrows, describing one even suitable for intensive use without revealing problems relating to the safety of the operator handling it.

### Description of the invention

According to the present invention as defined in independent claims 1 and 2, herein provided is a smart folding wheelbarrow capable of effectively solving the aforementioned problems. Preferred embodiments are defined in the dependent claims.

A first version of the wheelbarrow provides for that it consists of a frame which supports a deck delimited at the front by a front element; the frame also comprises a pedestal, which connects the deck to a wheel, and a foot suitable to rest on the ground when the wheelbarrow is stationary. Lastly, just like the common wheelbarrows, the frame also comprises a pair of shafts that the operator will grip as handles for the transportation of the wheelbarrow.

A second version of the wheelbarrow provides for that it consists of a deck delimited at the front by a front element; the deck is connected at one end to a pair of shafts and, on the opposite side, it rests on a crosspiece connected to said shafts and configured to keep the deck horizontal even if it rests on the shafts that have an oblique development. Said shafts converge to the centre and at the front on a point at which the wheel which allows the transportation of the wheelbarrow is fixed. On the opposite side of the wheel, there is a foot for stably resting the wheelbarrow on the ground when it is stationary.

In both embodiments, the wheelbarrow is advantageously foldable, i.e. it is susceptible to reversibly take a first operative configuration and a second folded configuration, in which the wheelbarrow, when inoperative, occupies the least possible space.

In particular, in the first embodiment, the shafts, the front and the foot, are connected to the frame using common hinges. When one desires to fold the wheelbarrow, one has to disconnect the wheel from the deck, tilt the front on the deck and rotate the shafts and feet around the hinges that connect them to the frame, until they are brought to a position parallel to the deck.

The second embodiment, for the folding thereof, provides for the disconnection of the wheel from the converging end of the shafts, the rotation of the crosspiece around the hinge that connects it to the shafts, until it is brought parallel to the shafts; the rotation of the deck around the hinge connecting it to the shafts until it is brought parallel to the shafts; the tilting of the front on the deck and the rotation of the foot until it is parallel to the shafts.

The smartness of the folding wheelbarrow in any embodiment lies in the fact that it is provided with at least one weight sensor connected to an acoustic signalling device so that the signalling device emits a pre-established sound upon detecting excessive weight on the deck.

A further advantage of the present invention lies in the fact that it is provided with sensors suitably positioned to detect the correct engagement between the rotatable components. Thus, in order to solve the problems found, when moving the wheelbarrow from the folded configuration to the operative configuration, the operator must wait for the short acoustic signal so as to be sure of having reassembled it in the correct manner.

Other even more advantageous embodiments, applicable to both versions, comprise, all or part of the following features:
- a rechargeable battery integrated in the frame, suitable to be recharged by the rolling of the wheel;
- a front light suitable to automatically light up when said wheel turns, illuminating the road immediately preceding said wheelbarrow;
- a pair of rear lights suitable to light up automatically when said wheel turns, signalling the presence of the wheelbarrow man to the person who sees it from the rear;
- at least one reflector device, preferably a plurality thereof, suitable to signal the presence of the wheelbarrow even under conditions of poor visibility;
- an odometer device;
- a spring system, at the bushing of said wheel, suitably adjusted to collapse upon exceeding a pre-established weight threshold, preventing the rolling of the wheel.

Besides the problem relating to the risks of folding wheelbarrows, which are brilliantly solved by the sensors described above, the additional features allow to advantageously achieve the advantages too in terms of ergonomics and work safety.

According to a variant of the wheelbarrow the acoustic signalling device is suitable to emit a first sound upon exceeding the weight threshold recommended for the health of the operator and a second prolonged sound upon exceeding the maximum weight allowed by the structure of the wheelbarrow. Possibly, should the wheelbarrow also be provided with an odometer, the acoustic signalling device may emit an alarm sound even upon exceeding a pre-established limit of kilometres travelled transporting a load.

The advantages offered by the present invention are apparent in the light of the description set forth herein and will be further clarified by the accompanying figures and the detailed description thereof.

### Description of the figures

The invention will be described hereinafter in at least one preferred embodiment by way of non-limiting example and with the aid of the attached figures, wherein:

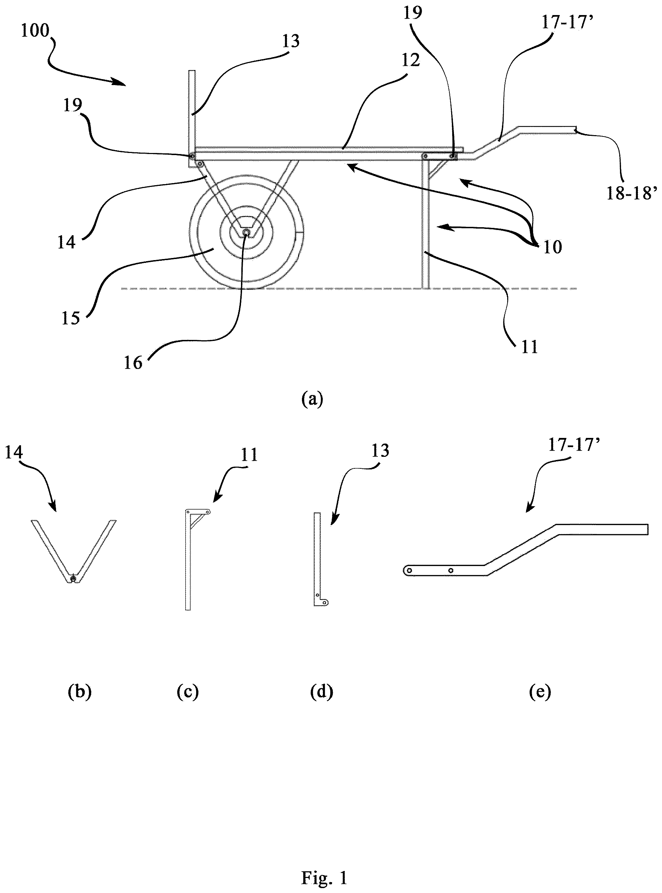

- FIGURE 1 shows the side view (a) and the main constituent elements (b), (c), (d), (e) of a first embodiment of the wheelbarrow 100.

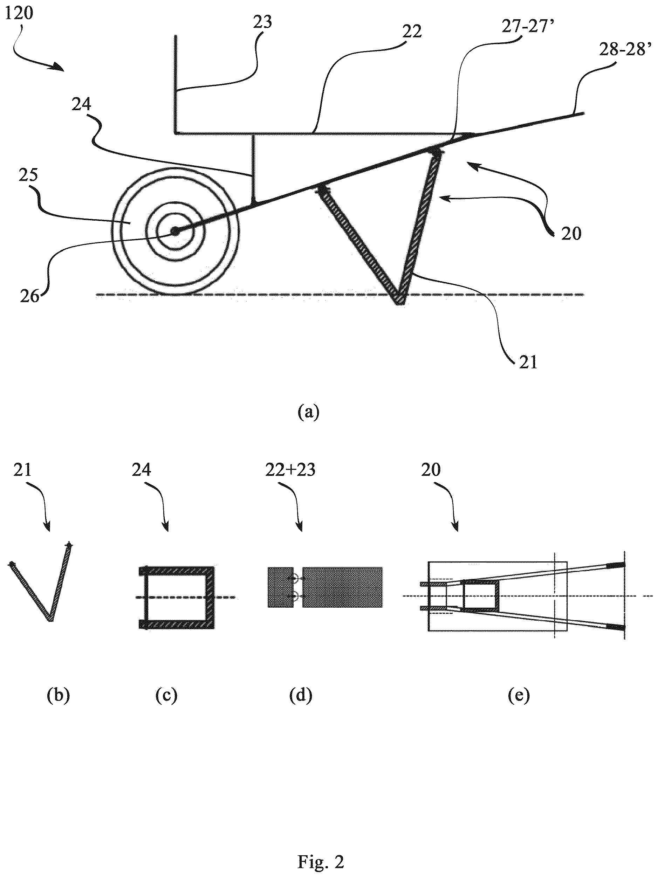

- FIGURE 2 shows the side view (a) and the main constituent elements (b), (c), (d), (e) of a second embodiment of the wheelbarrow 120.

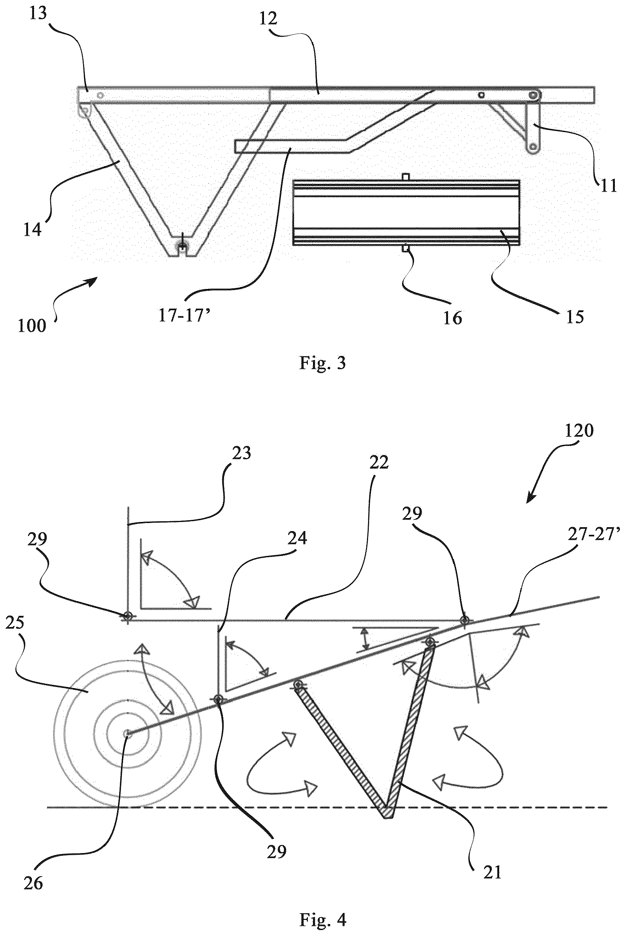

- FIGURE 3 shows the wheelbarrow 100 of the first embodiment in the folded configuration.
- FIGURE 4 shows the wheelbarrow 120 of the second embodiment in the folded configuration.
- FIGURE 5 schematically illustrates the additional technological features that confer smartness to the wheelbarrow 100-120.

### Detailed description of the invention

The present invention will now be illustrated by way of non-limiting or binding example, using the figures which illustrate some embodiments in relation to the present inventive concept.

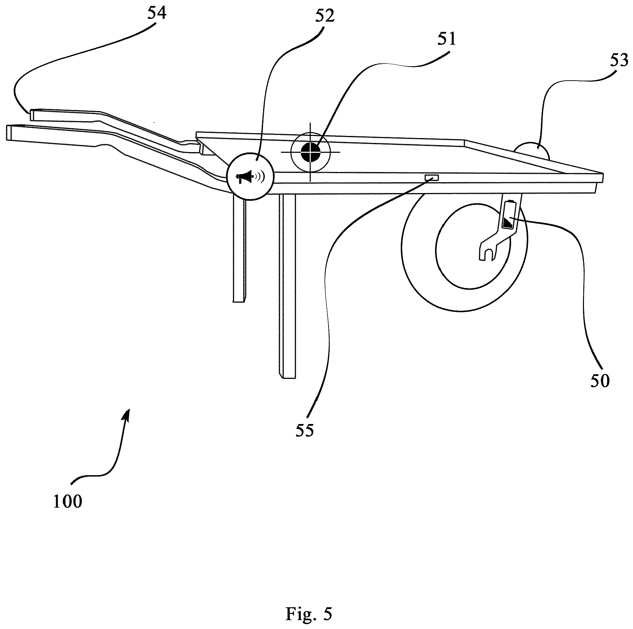

With reference to FIG. 5, the technological components that confer "smartness" to the wheelbarrow 100-120 of the present invention, are shown. In particular, it is a weight sensor 51 suitable to detect the weight of the material arranged on the deck 12-22. An acoustic signalling device 52 suitable to emit a first sound upon exceeding the weight threshold recommended for the health of the operator and a second prolonged sound upon exceeding the maximum weight allowed by the strength of the frame 10-20.

The acoustic signalling device is also suitable to emit a short sound when the wheelbarrow is ready to be loaded, i.e. when it is returned to an operative configuration from a folded configuration, leaving the operator to comfortably load the deck 12-22 without fear that any part of the wheelbarrow 100-120 may move.

Other technical features, never before associated with similar wheelbarrows, are the front light 53, the pair of rear lights 54, preferably red, and the side reflector devices 55 which allow the wheelbarrow 100-120 a visibility similar to that of a road vehicle.

All the aforementioned features are power-supplied by a rechargeable battery 50 integrated in the frame 10-20 of the wheelbarrow 100-120. Said battery 50 is suitable to recharge upon the rotation of the wheel 15-25 around its own bushing 16-26.

In terms of construction, the wheelbarrow 100 represented in the reference Fig. 5 is only one of the two embodiments claimed.

This embodiment consists of a frame 10 which supports a loading deck 12 suitable to receive the material to be transported. The deck 12 is connected, at the bottom side thereof, to at least one front element 13 suitable to stop the sliding of the material when the wheelbarrow 100 is in use. The frame 10 further comprising a pedestal 14 connected at the top to the platform 12 and at the bottom to a bush 16 of a rubberised wheel 15. The frame 10 also comprises a foot 11 provided with an upper end connected at the bottom to the deck 12 and with a lower end suitable to be rested on the ground when the wheelbarrow 100 is stationary. The wheelbarrow 100 also consists of at least one pair of shafts 17-17' whose distal ends are suitable to be gripped by an operator like handles 18-18' to lift the foot 11 and push the wheelbarrow 100 in the desired direction.

In this embodiment, the foot 11, said pair of shafts 17-17' and said front 13 are connected to said frame 10 by means of respective common hinges 19 suitable to allow the rotation of the respective components between a first operative configuration and a second folded configuration which occupies the least possible space.

Lastly, it is clear that modifications, additions or variations may be applied to the invention described heretofore which are obvious to a person skilled in the art, without departing from the scope of protection provided by the attached claims.

## Claims

1. Smart folding wheelbarrow (100), suitable for the manual transportation of loads, provided with a framework (10) which supports a loading deck (12) suitable to house the material to be transported, said deck (12) being connected, at the bottom side thereof, to at least one front element (13) suitable to stop the material from slipping off when the wheelbarrow (100) is being transported and therefore the deck (12) is inclined forwards; said framework (10) further comprising at least one wheel (15) and a pedestal (14) provided with a first end connected to the lower surface of said deck (12) and with a second end engaged with at least one bushing (16) of the at least one wheel (15) preferably rubberised; said framework (10) further comprising at least one leg (11) provided with an upper end connected beneath said deck (12) and with a lower end suitable to rest on the ground when the wheelbarrow (100) is stationary; said framework (10) further comprising at least one pair of shafts (17-17') whose distal ends are suitable to be gripped by an operator as handles (18-18') to lift said at least one leg (11) and push the wheelbarrow (100) in the desired direction; said at least one leg (11), said pair of shafts (17-17') and said front element (13) being connected to said framework (10) by means of respective common hinges (19) suitable to allow the rotation of the respective components between a first operative configuration and a second folded configuration; said first operative configuration being suitable to allow the normal use of the wheelbarrow (100) and said second folded configuration being such to allow the wheelbarrow (100) to be stored in a manner such to occupy as little space as possible;
wherein in said second folded configuration, said at least one wheel (15) being disengaged from said pedestal (14), said at least one leg (11) being rotated until it is parallel to said deck (12), said shafts (17-17') being also rotated until they face towards said pedestal (14) and said front element (13) being tilted until they rest on said deck (12); said wheelbarrow (100) being **characterised in that** it is provided with at least one weight sensor (51) to detect the weight of the material placed on said deck (12); said weight sensor (51) being connected to an acoustic indicator (52) adapted to emit a sound when the detected load exceeds a predetermined weight limit; said wheelbarrow (100) further being provided with sensors adapted to detect the correct engagement between the rotatable components, said acoustic indicator (52) adapted to emit a different and short sound when, returning the wheelbarrow (100) from the folded configuration to the operative configuration, the correct engagement occurs between the shafts (17-17'), the at least one leg (11), the front element (13) and the at least one wheel (15) with the framework (10).

2. Smart folding wheelbarrow (120), suitable for the manual transportation of loads, provided with a framework (20) which supports a loading deck (22) suitable to house the material to be transported, said deck (22) being connected, at the bottom side thereof, to at least one front element (23) suitable to stop the material from slipping off when the wheelbarrow (120) is being transported and therefore the deck (22) is inclined forwards; said framework (20) further comprising at least one leg (21), at least one wheel (25) and at least one pair of shafts (27-27') whose distal ends are suitable to be gripped by an operator as handles (28-28') to lift said at least one leg (21) and push the wheelbarrow (120) in the desired direction; said shafts (27-27') converging at a point at which they engage at least one bushing (26) of the at least one wheel (25) preferably rubberised; said shafts (27-27') being connected, at the lower face thereof, to the at least one leg (21) provided with a lower end suitable to rest on the ground when the wheelbarrow (120) is stationary; said shafts (27-27') further being rotatably connected, by means of a common hinge (29), at the upper face thereof, to at least one crosspiece (24) provided with an upper end suitable to support said deck (22); said at least one leg (21), said front element (23), said at least one crosspiece (24) and said deck (22) being connected to said shafts (27-27') by means of respective common hinges (29) suitable to allow the rotation of the respective components between a first operative configuration and a second folded configuration; said first operative configuration being suitable to allow the normal use of the wheelbarrow (120) and said second folded configuration being such to allow the wheelbarrow (120) to be stored in a manner such to occupy as little space as possible;
wherein in said second folded configuration, said at least one wheel (25) being disengaged from said shafts (27-27'), said at least one leg (21) being rotated until it is parallel to said shafts (27-27'), said at least one crosspiece (24) being also rotated until it is parallel to said shafts (27-27'), said front element (23) being tilted until it rests on said deck (22) and said deck being able to rotate until it is parallel to said shafts (27-27'); said wheelbarrow (100) being **characterised in that** it is provided with at least one weight sensor (51) to detect the weight of the material placed on said deck (22); said weight sensor (51) being connected to an acoustic indicator (52) adapted to emit a sound when the detected load exceeds a predetermined weight limit; said wheelbarrow (120) further being provided with sensors adapted to detect the correct engagement between the rotating components, said acoustic indicator (52) adapted to emit a different and short sound when, returning the wheelbarrow (100) from the folded configuration to the operative configuration, the correct engagement occurs between the shafts (27-27'), the at least one leg (21), the front element (23), the deck (22), the at least one crosspiece (24) and the at least one wheel (25) with the framework (20).

3. Smart folding wheelbarrow (100- 120) according to any one of the preceding claims 1 or 2, **characterised in that** said at least one wheel (15), rotating when the wheelbarrow (100) is transported, is suitable to charge a rechargeable battery (50) integrated in the framework (10) of said wheelbarrow (100).

4. Smart folding wheelbarrow (100- 120), according to any one of the preceding claims, **characterised in that** said acoustic indicator (52) is adapted to emit a first sound upon exceeding the weight threshold recommended for the health of the operator and a second prolonged sound upon exceeding the maximum weight allowed by the chassis resistance (10- 20).

5. Smart folding wheelbarrow (100- 120) according to any one of the preceding claims, **characterised in that** it comprises at least one front lamp (53) adapted to turn on automatically when said at least one wheel (15) rotates, illuminating the road immediately ahead of said wheelbarrow (100).

6. Smart folding wheelbarrow (100- 120), according to any one of the preceding claims, **characterised in that** it comprises at least one pair of rear lamps (54) adapted to turn on automatically when said at least one wheel (15) rotates, signalling the presence of the wheelbarrow to the person seeing it from the rear.

7. Smart folding wheelbarrow (100- 120), according to any one of the preceding claims, **characterised in that** it comprises at least one reflector device (55), preferably a plurality of reflector devices (55), adapted to signal the presence of the wheelbarrow (100) even in conditions of poor visibility.

8. Smart folding wheelbarrow (100- 120) according to any one of the preceding claims, **characterised in that** it comprises an odometer device.

9. Smart folding wheelbarrow (100- 120), according to the preceding claim, **characterised in that** said odometer device is connected to said acoustic indicator (52) to emit an alarm sound upon exceeding a predetermined limit of kilometres travelled transporting a load.

10. Smart folding wheelbarrow (100- 120) according to any one of the preceding claims, **characterised in that** it is provided with a spring system at the bushing (16- 26) of said at least one wheel (15- 25), said spring system being suitably adjusted to collapse when upon exceeding a predetermined weight threshold, preventing the rolling of the wheel (15- 25).

## Patentansprüche

1. Intelligente klappbare Schubkarre (100), geeignet für den manuellen Transport von Lasten, versehen mit einem Rahmen (10), das ein Ladedeck (12) trägt, das geeignet ist, das zu transportierende Gehäuse aufzunehmen, wobei das Deck (12) an seiner Unterseite mit zumindest einem Frontelement (13) verbunden ist, das geeignet ist, das Material am Abrutschen zu hindern, wenn die Schubkarre (100) transportiert wird und daher das Deck (12) nach vorne geneigt ist; wobei das Rahmen (10) weiterhin zumindest ein Rad (15) und einen Sockel (14) aufweist, der mit einem ersten Ende, das mit der unteren Oberfläche des Decks (12) verbunden ist, und mit einem zweiten Ende, das mit zumindest einer Buchse (16) des zumindest einen vorzugsweise gummierten Rades (15) in Eingriff steht, versehen ist; wobei der Rahmen (10) weiterhin zumindest ein Bein (11) aufweist, das mit einem unterhalb des Decks (12) verbundenen oberen Ende und mit einem unteren Ende, das geeignet ist, auf dem Boden zu ruhen, wenn die Schubkarre (100) stationär ist, versehen ist; wobei der Rahmen (10) weiterhin zumindest ein Paar von Achsen (17-17') aufweist, deren distale Enden geeignet sind, von einem Bediener als Griffe (18-18') ergriffen zu werden, um das zumindest eine Bein (11) anzuheben und die Schubkarre (100) in die gewünschte Richtung zu schieben; wobei das zumindest eine Bein (11), das Paar von Achsen (17-17') und das Frontelement (13) mit dem Rahmen (10) mittels jeweiliger üblicher Scharniere (19), die geeignet sind, die Drehung der jeweiligen Komponenten zwischen einer ersten Betriebskonfiguration und einer zweiten geklappten Konfiguration zu ermöglichen, verbunden sind; wobei die erste Betriebskonfiguration geeignet ist, den normalen Gebrauch der Schubkarre (100) zu ermöglichen, und die zweite geklappte Konfiguration dergestalt ist, dass sie es ermöglicht, die Schubkarre (100) auf eine solche Weise zu lagern, dass sie so wenig Platz wie möglich beansprucht; wobei in der zweiten zusammengeklappten Konfiguration das zumindest eine Rad (15) von dem Sockel (14) gelöst ist, das zumindest eine Bein (11) gedreht ist, bis es parallel zu dem Deck (12) verläuft, die Achsen (17-17') ebenfalls gedreht werden, bis sie dem Sockel (14) zugewandt sind, und das Frontelement (13) gekippt ist, bis sie auf dem Deck (12) aufliegen; die Schubkarre (100) **dadurch gekennzeichnet ist, dass** sie mit zumindest einem Gewichtssensor (51) versehen ist, um das Gewicht des auf dem Deck (12) platzierten Materials zu detektieren; wobei der Gewichtssensor (51) mit einem akustischen Indikator (52) verbunden ist, der dazu ausgebildet ist, einen Ton abzugeben, wenn die detektierte Last eine vorgegebene Gewichtsgrenze überschreitet; wobei die Schubkarre (100) weiterhin mit Sensoren versehen ist, die dazu angepasst sind, den korrekten Eingriff zwischen den drehbaren Komponenten zu detektieren, wobei der akustische Indikator (52) dazu ausgebildet ist, einen anderen und kurzen Ton abzugeben, wenn beim Zurückkehren der Schubkarre (100) aus der zusammengeklappten Konfiguration in die Betriebskonfiguration der korrekte Eingriff zwischen den Achsen (17-17'), dem zumindest einen Bein (11), dem Frontelement (13) und dem zumindest einen Rad (15) mit dem Rahmen (10) erfolgt.

2. Intelligente klappbare Schubkarre (120), geeignet für den manuellen Transport von Lasten, versehen mit einem Rahmen (20), der ein Ladedeck (22) trägt, das geeignet ist, das zu transportierende Material aufzunehmen, wobei das Deck (22) an seiner Unterseite mit zumindest einem Frontelement (23) verbunden ist, das geeignet ist, das Material am Abrutschen zu hindern, wenn die Schubkarre (120) transportiert wird und daher das Deck (22) nach vorne geneigt ist; wobei der Rahmen (20) weiterhin zumindest ein Bein (21), zumindest ein Rad (25) und zumindest ein Paar Achsen (27-27') aufweist, deren distale Enden von einem Bediener als Griffe (28-28') ergriffen werden können, um das zumindest eine Bein (21) anzuheben und die Schubkarre (120) in die gewünschte Richtung zu schieben; wobei die Achsen (27-27') an einem Punkt, an dem sie in zumindest eine Buchse (26) des zumindest einen vorzugsweise gummierten Rades (25) eingreifen, zusammenlaufen; wobei die Achsen (27-27') an ihrer Unterseite mit dem zumindest einen Bein (21) verbunden sind, das mit einem unteren Ende, das geeignet ist, auf dem Boden aufzuliegen, wenn die Schubkarre (120) stillsteht, versehen ist; wobei die Achsen (27-27') weiterhin mittels eines üblichen Scharniers (29) an ihrer Oberseite drehbar mit zumindest einem Querstück (24), das mit einem oberen Ende, das geeignet ist, das Deck (22) zu tragen, versehen ist, verbunden sind; wobei das zumindest eine Bein (21), das Frontelement (23), das zumindest eine Querstück (24) und das Deck (22) mit den Achsen (27-27') mittels entsprechender üblicher Scharniere (29) verbunden sind, die geeignet sind, die Drehung der jeweiligen Komponenten zwischen einer ersten Betriebskonfiguration und einer zweiten zusammengeklappten Konfiguration zu ermöglichen; wobei die erste Betriebskonfiguration geeignet ist, die normale Verwendung der Schubkarre (120) zu ermöglichen, und die zweite geklappte Konfiguration dergestalt ist, dass sie es ermöglicht, die Schubkarre (100) auf eine solche Weise zu lagern, dass sie so wenig Platz wie möglich beansprucht; wobei in der zweiten zusammengeklappten Konfiguration das zumindest eine Rad (25) von den Achsen (27-27') gelöst ist, das zumindest eine Bein (21) gedreht ist, bis es parallel zu den Achsen (27-27') verläuft, das zumindest eine Querstück (24) ebenfalls gedreht ist, bis es parallel zu den Achsen (27-27') verläuft, das Frontelement (23) gekippt ist, bis es auf dem Deck (22) ruht, und das Deck sich drehen kann, bis es parallel zu den Achsen (27-27') verläuft, wobei die Schubkarre (100) **dadurch gekennzeichnet ist, dass** sie mit zumindest einem Gewichtssensor (51) versehen ist, um das Gewicht des auf dem Deck (22) platzierten Materials zu detektieren; wobei der Gewichtssensor (51) mit einem akustischen Indikator (52) verbunden ist, der dazu ausgebildet ist, einen Ton abzugeben, wenn die detektierte Last eine vorgegebene Gewichtsgrenze überschreitet; wobei die Schubkarre (120) weiterhin mit Sensoren versehen ist, die dazu ausgebildet sind, den korrekten Eingriff zwischen den sich drehenden Komponenten zu detektieren, wobei der akustische Indikator (52) dazu ausgebildet ist, einen anderen und kurzen Ton abzugeben, wenn beim Zurückkehren der Schubkarre (100) aus der klappbaren Konfiguration in die Betriebskonfiguration der korrekte Eingriff zwischen den Achsen (27-27'), dem zumindest einen Bein (21), dem Frontelement (23), dem Deck (22), dem zumindest einen Querstück (24) und dem zumindest einen Rad (25) mit dem Rahmen (20) erfolgt.

3. Intelligente klappbare Schubkarre (100-120) nach einem der vorhergehenden Ansprüche 1 oder 2, **dadurch gekennzeichnet, dass** das zumindest eine Rad (15), das sich dreht, wenn die Schubkarre (100) transportiert wird, geeignet ist, eine wiederaufladbare Batterie (50) aufzuladen, die in den Rahmen (10) der Schubkarre (100) integriert ist.

4. Intelligente klappbare Schubkarre (100-120) nach einem der vorhergehenden Ansprüche, **dadurch gekennzeichnet, dass** der akustische Indikator (52) dazu ausgebildet ist, auf das Überschreiten des für die Gesundheit des Bedieners empfohlenen Gewichtsschwellenwerts hin einen ersten Ton und auf das Überschreiten des durch den Chassiswiderstands (10-20) erlaubten Maximalgewichts hin einen zweiten verlängerten Ton abzugeben.

5. Intelligente klappbare Schubkarre (100-120) nach einem der vorhergehenden Ansprüche, **dadurch gekennzeichnet, dass** sie zumindest eine Frontleuchte (53) aufweist, die dazu ausgebildet ist, automatisch einzuschalten, wenn sich das zumindest eine Rad (15) dreht, und die die Straße unmittelbar vor der Schubkarre (100) beleuchtet.

6. Intelligente klappbare Schubkarre (100-120) nach einem der vorhergehenden Ansprüche, **dadurch gekennzeichnet, dass** sie zumindest ein Paar Rückleuchten (54) aufweist, die dazu ausgebildet sind, automatisch einzuschalten, wenn sich das zumindest eine Rad (15) dreht, und die der Person, die sie von hinten sieht, die Anwesenheit der Schubkarre signalisieren.

7. Intelligente klappbare Schubkarre (100-120) nach einem der vorhergehenden Ansprüche, **dadurch gekennzeichnet, dass** sie zumindest eine Reflektorvorrichtung (55), vorzugsweise mehrere Reflektorvorrichtungen (55), aufweist, die dazu ausgebildet sind, die Anwesenheit der Schubkarre (100) auch bei schlechter Sicht zu signalisieren.

8. Intelligente klappbare Schubkarre (100-120) nach einem der vorhergehenden Ansprüche, **dadurch gekennzeichnet, dass** sie eine Wegstreckenzähler-Vorrichtung aufweist.

9. Intelligente klappbare Schubkarre (100-120) nach einem der vorhergehenden Ansprüche, **dadurch gekennzeichnet, dass** die Wegstreckenzähler-Vorrichtung mit dem akustischen Indikator (52) verbunden ist, um auf das Überschreiten eines vorgegebenen Limits von Kilometern, die für das Transportieren einer Ladung zurückgelegt werden, hin einen Alarmton abzugeben.

10. Intelligente klappbare Schubkarre (100-120) nach einem der vorhergehenden Ansprüche, **dadurch gekennzeichnet, dass** sie mit einem Federsystem an der Buchse (16-26) des zumindest einen Rades (15-25) versehen ist, wobei das Federsystem in geeigneter Weise so eingestellt ist, dass es auf das Überschreiten eines vorgegebenen Gewichtsschwellenwertes hin kollabiert und das Rollen des Rades (15-25) verhindert.

## Revendications

1. Brouette pliable intelligente (100), appropriée pour le transport manuel de charges, dotée d'une ossature (10) qui supporte un plateau de chargement (12) approprié pour recevoir le matériau à transporter, ledit plateau (12) étant relié, du côté fond de celui-ci, à au moins un élément avant (13) approprié pour empêcher le matériau de glisser lorsque la brouette (100) est transportée et que, par conséquent, le plateau (12) est incliné vers l'avant ; ladite ossature (10) comprenant en outre au moins une roue (15) et un socle (14) doté d'une première extrémité reliée à la surface inférieure dudit plateau (12) et d'une deuxième extrémité en prise avec au moins une douille (16) de l'au moins une roue (15) de préférence caoutchoutée ; ladite ossature (10) comprenant en outre au moins un pied (11) doté d'une extrémité supérieure reliée sous ledit plateau (12) et d'une extrémité inférieure appropriée pour reposer sur le sol lorsque la brouette (100) est statique ; ladite ossature (10) comprenant en outre au moins une paire de tiges (17-17') dont les extrémités distales sont appropriées pour être saisies par un opérateur en tant que poignées (18-18') pour soulever ledit au moins un pied (11) et pousser la brouette (100) dans la direction souhaitée ; ledit au moins un pied (11), ladite paire de tiges (17-17') et ledit élément avant (13) étant reliés à ladite ossature (10) à l'aide de charnières communes (19) respectives appropriées pour permettre la rotation des composants respectifs entre une première configuration de fonctionnement et une deuxième configuration pliée ; ladite première configuration de fonctionnement étant appropriée pour permettre l'utilisation normale de la brouette (100) et ladite deuxième configuration pliée étant telle qu'elle permet à la brouette (100) d'être rangée d'une manière telle qu'elle occupe aussi peu d'espace que possible ; dans laquelle, dans ladite deuxième configuration pliée, ladite au moins une roue (15) est désolidarisée dudit socle (14), ledit au moins un pied (11) étant tourné jusqu'à ce qu'il soit parallèle audit plateau (12), lesdites tiges (17-17') étant également tournées jusqu'à ce qu'elles fassent face audit socle (14) et ledit élément avant (13) étant incliné jusqu'à ce qu'il repose sur ledit plateau (12) ; ladite brouette (100) étant **caractérisée en ce qu'**elle est dotée d'au moins un capteur de poids (51) pour détecter le poids du matériau placé sur ledit plateau (12) ; ledit capteur de poids (51) étant relié à un indicateur acoustique (52) adapté pour émettre un son lorsque la charge détectée dépasse une limite de poids prédéterminée ; ladite brouette (100) étant également dotée de capteurs adaptés pour détecter la mise en prise correcte entre les composants rotatifs, ledit indicateur acoustique (52) étant adapté pour émettre un son bref et différent lorsque, en faisant revenir la brouette (100) de la configuration pliée à la configuration de fonctionnement, la mise en prise correcte se produit entre les tiges (17-17'), l'au moins un pied (11), l'élément avant (13) et l'au moins une roue (15) avec l'ossature (10).

2. Brouette pliable intelligente (120), appropriée pour le transport manuel de charges, dotée d'une ossature (20) qui supporte un plateau de chargement (22) approprié pour recevoir le matériau à transporter, ledit plateau (22) étant relié, du côté fond de celui-ci, à au moins un élément avant (23) approprié pour empêcher le matériau de glisser lorsque la brouette (120) est transportée et que, par conséquent, le plateau (22) est incliné vers l'avant ; ladite ossature (20) comprenant en outre au moins un pied (21), au moins une roue (25) et au moins une paire de tiges (27-27') dont les extrémités distales sont appropriées pour être saisies par un opérateur en tant que poignées (28-28') pour soulever ledit au moins un pied (21) et pousser la brouette (120) dans la direction souhaitée ; lesdites tiges (27-27') convergeant en un point auquel elles entrent en prise avec au moins une douille (26) de l'au moins une roue (25) de préférence caoutchoutée ; lesdites tiges (27-27') étant reliées, en face inférieure de celles-ci, à l'au moins un pied (21) doté d'une extrémité inférieure appropriée pour reposer sur le sol lorsque la brouette (120) est statique ; lesdites tiges (27-27') étant en outre reliées de manière rotative, à l'aide d'une charnière commune (29), en face supérieure de celles-ci, à au moins une traverse (24) dotée d'une extrémité supérieure appropriée pour supporter ledit plateau (22) ; ledit au moins un pied (21), ledit élément avant (23), ladite au moins une traverse (24) et ledit plateau (22) étant reliés auxdites tiges (27-27') à l'aide de charnières communes (29) respectives appropriées pour permettre la rotation des composants respectifs entre une première configuration de fonctionnement et une deuxième configuration pliée ; ladite première configuration de fonctionnement étant appropriée pour permettre l'utilisation normale de la brouette (120) et ladite deuxième configuration pliée étant telle qu'elle permet à la brouette (120) d'être rangée d'une manière telle qu'elle occupe aussi peu d'espace que possible ; dans laquelle, dans ladite deuxième configuration pliée, ladite au moins une roue (25) est désolidarisée desdites tiges (27-27'), ledit au moins un pied (21) étant tourné jusqu'à ce qu'il soit parallèle auxdites tiges (27-27'), ladite au moins une traverse (24) étant également tournée jusqu'à ce qu'elle soit parallèle auxdites tiges (27-27'), ledit élément avant (23) étant incliné jusqu'à ce qu'il repose sur ledit plateau (22) et ledit plateau étant capable de tourner jusqu'à ce qu'il soit parallèle auxdites tiges (27-27') ; ladite brouette (100) étant **caractérisée en ce qu'**elle est dotée d'au moins un capteur de poids (51) pour détecter le poids du matériau placé sur ledit plateau (22) ; ledit capteur de poids (51) étant relié à un indicateur acoustique (52) adapté pour émettre un son lorsque la charge détectée dépasse une limite de poids prédéterminée ; ladite brouette (120) étant également dotée de capteurs adaptés pour détecter la mise en prise correcte entre les composants rotatifs, ledit indicateur acoustique (52) étant adapté pour émettre un son bref et différent lorsque, en faisant revenir la brouette (100) de la configuration pliée à la configuration de fonctionnement, la mise en prise correcte se produit entre les tiges (27-27'), l'au moins un pied (21), l'élément avant (23), le plateau (22), l'au moins une traverse (24) et l'au moins une roue (25) avec l'ossature (20).

3. Brouette pliable intelligente (100-120) selon l'une des revendications 1 ou 2 précédentes, **caractérisée en ce que** ladite au moins une roue (15), tournant lorsque la brouette (100) est transportée, est appropriée pour charger une batterie rechargeable (50) intégrée dans l'ossature (10) de ladite brouette (100).

4. Brouette pliable intelligente (100-120) selon l'une des revendications précédentes, **caractérisée en ce que** ledit indicateur acoustique (52) est adapté pour émettre un premier son lors du dépassement du seuil de poids recommandé pour la santé de l'opérateur et un deuxième son prolongé lors du dépassement du poids maximal autorisé par la résistance de châssis (10-20).

5. Brouette pliable intelligente (100-120) selon l'une des revendications précédentes, **caractérisée en ce qu'**elle comprend au moins une lampe avant (53) adaptée pour s'allumer automatiquement lorsque ladite au moins une roue (15) tourne, éclairant la route juste devant ladite brouette (100).

6. Brouette pliable intelligente (100-120) selon l'une des revendications précédentes, **caractérisée en ce qu'**elle comprend au moins une paire de lampes arrière (54) adaptées pour s'allumer automatiquement lorsque ladite au moins une roue (15) tourne, signalisant la présence de la brouette à la personne la voyant depuis l'arrière.

7. Brouette pliable intelligente (100-120) selon l'une des revendications précédentes, **caractérisée en ce qu'**elle comprend au moins un dispositif réfléchissant (55), de préférence une pluralité de dispositifs réfléchissants (55), adaptés pour signaler la présence de la brouette (100) même dans des conditions de mauvaise visibilité.

8. Brouette pliable intelligente (100-120) selon l'une des revendications précédentes, **caractérisée en ce qu'**elle comprend un dispositif odomètre.

9. Brouette pliable intelligente (100-120) selon la revendication précédente, **caractérisée en ce que** ledit dispositif odomètre est relié audit indicateur acoustique (52) pour émettre une alarme sonore lors du dépassement d'une limite prédéterminée de kilomètres parcourus en transportant une charge.

10. Brouette pliable intelligente (100-120) selon l'une quelconque des revendications précédentes, **caractérisée en ce qu'**elle est dotée d'un système de ressort à la douille (16-26) de ladite au moins une roue (15-25), ledit système de ressort étant ajusté de manière appropriée pour s'affaisser lors du dépassement d'un seuil de poids prédéterminé, empêchant le roulement de la roue (15-25).
